(19) Europäisches Patentamt
European Patent Office
Office européen des brevets

(11) Publication number: 0 391 549 A2

(12) **EUROPEAN PATENT APPLICATION**

(21) Application number: 90302654.0

(22) Date of filing: 13.03.90

(51) Int. Cl.[5]: C08G 73/12, C08L 79/08, C08J 5/04, C08J 5/06, C08J 5/24

(30) Priority: 03.04.89 GB 8907462

(43) Date of publication of application: 10.10.90 Bulletin 90/41

(84) Designated Contracting States: AT BE CH DE ES FR GB IT LI LU NL SE

(71) Applicant: IMPERIAL CHEMICAL INDUSTRIES PLC
Imperial Chemical House, Millbank
London SW1P 3JF(GB)

(72) Inventor: Chisholm, Michael Stephen
31 Sideling Tails, Yarm
Stockton on Tees, Cleveland(GB)
Inventor: McGrail, Patrick Terence
Whitehall Farm, Mickleby
Saltburn, Cleveland(GB)

(74) Representative: Graham, John George et al
Legal Department Patents Imperial Chemical Industries PLC PO Box 6 Bessemer Road
Welwyn Garden City Hertfordshire AL7 1HD(GB)

(54) **Polymer compositions.**

(57) Polymer compositions, and fibre-reinforced composites made therefrom, comprise a thermoset component which is a reaction product of a crosslinking reaction involving an intermediate, and optionally a cross-linking reagent, the intermediate being a reaction product of a bismaleimide and a reactive diluent reacted in the presence of an inhibitor reagent capable of inhibiting cross-linking reactions between maleimide groups. The diluent is selected from compounds having an unsaturated bond and/or a reactive oxygen-carbon bond capable of reacting with the bismaleimide. The compositions can include other thermoset components and/or thermoplast components, especially polyarylsulphones having reactive end groups.

EP 0 391 549 A2

## Polymer Compositions

This invention relates to polymer compositions.

Polymer compositions comprising bismaleimide (BMI) compounds as a thermoset component are known. Such compositions, which often contain other thermoset components and/or thermoplast tougheners, fillers etc have many uses. However, their utility is often limited owing to the limited solubility of the BMI component in "easily removed" solvents (ie solvents having relatively low boiling points) which makes the solution impregnation of fibres for use in composites difficult. It is currently not feasible to use other impregnation techniques with many BMI's.

According to the invention, a polymer composition comprises a thermoset component which is the reaction product of a cross-linking reaction involving an intermediate, and optionally a cross-linking reagent, said intermediate being a reaction product of a bismaleimide compound and a reactive diluent reacted in the presence of an inhibitor reagent capable of inhibiting cross-linking reactions between maleimide groups, said diluent being selected from compounds having an unsaturated bond and/or a reactive oxygen-carbon bond capable of reacting with said bismaleimide compound and said inhibitor reagent being present in a quantity sufficient to inhibit said cross-linking reactions during the formation of said intermediate but not in a quantity sufficient to inhibit said cross-linking reactions during the formation of said thermoset component.

The Applicants have found that the intermediate is usually more soluble in "easily removed" solvents than the starting BMI compound. Consequently, solutions of the intermediate, together with any other components of the polymer composition, of a strength adequate for impregnating fibres, eg 10% to 50% weight/volume (w/v), in "easily removed" solvents can be prepared and utilised for that purpose.

Thus, also according to the invention, a composite comprises a polymeric matrix reinforced with fibres, particularly continuous collimated fibres, said matrix comprising a thermoset component which is the reaction product of a cross-linking reaction involving an intermediate, and optionally a cross-linking reagent, said intermediate being a reaction product of a bismaleimide compound and a reactive diluent reacted in the presence of an inhibitor reagent capable of inhibiting cross-linking reactions between maleimide groups, said diluent being selected from compounds having an unsaturated bond and/or a reactive oxygen-carbon bond capable of reacting with said bismaleimide compound and said inhibitor reagent being present in a quantity sufficient to inhibit said cross-linking reactions during the formation of said intermediate but not in a quantity sufficient to inhibit said cross-linking reactions during the formation of said thermoset component.

The invention also includes processes of preparing said intermediate by reacting said bismaleimide compound with said diluent in the presence of said inhibitor reagent and of preparing said composite by impregnating fibres with a solution comprising said intermediate, and optionally said cross-linking reagent, and removing the solvent therefrom. In the latter instance, the method further comprises treating the impregnated fibres to cause said intermediate, and optionally said cross-linking reagent, to react to produce the thermoset component.

The invention also includes an intermediate formed by said reaction of said bismaleimide compound with said diluent in the presence of said inhibitor reagent, said intermediate being soluble in "easily removed" solvents and a solution of said intermediate in such a solvent. The invention further includes a prepreg comprised by fibres, particularly continuous collimated fibres, impregnated with said intermediate.

BMI compounds of use in the invention may be of formula I below:-

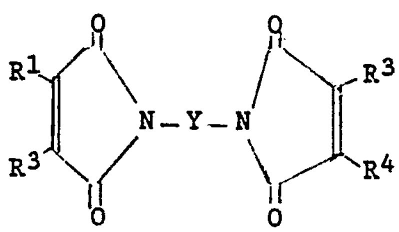

I

wherein

$R^1$,$R^2$,$R^3$ and $R^4$ are independently -H, $-CH_3$ or halogen, preferably Cl, and

Y is $R^5$ or Ar;

wherein

$R^5$ is $C_1$ to $C_{12}$ alkylene, straight or branched chain, eg $-CH_2C(CH_3)_2CH_2CH(CH_3)CH_2CH_2-$; and
Ar is alkyl-substituted,eg methyl, 1,3- or 1,4-phenylene or $Ph(X-Ph)_m$;
wherein
Ph is phenylene;
m is an integer from 0 to 3; and
X is independently -O-, -S-, -CO-, $-SO_2-$, $-CH_2-$, $-C(CH_3)_2-$or $-C(CF_3)_2-$; or may be an oligomeric or polymeric reaction product of a Michael addition reaction between a BMI compound of formula I and a diamine of formula II below or an amino acid hydrazide:-
$H_2N-Ph(X-Ph)_mNH_2$ II.
wherein
m and X are as hereinbefore defined.

Examples of commercially-available Michael addition products are:-
Kerimide 601 (available from Rhone Poulenc)
Compimide 796 (available from Technochemie).

Mixtures of the aforementioned BMI compounds may also be used.

In preferred BMI compounds of formula I, Y is Ar, Ar is $Ph(X-Ph)_m$, m>0, and X is $-SO_2-$. Preferred compounds are 3,3′-bismaleimidodiphenylsulphone and 4,4′-bismaleimidodiphenylsulphone.

The weight proportion of BMI compound is in the range 5% to 95%, preferably 30% to 70%, more especially 40% to 60%.

Reactive diluents of use in the invention are compounds containing allyl, isopropenyl, vinyl, acrylic, cyanate and/or epoxide radicals. Examples of such compounds are:-
2,2-bis(3-allyl-4-hydroxyphenyl)propane
2-methoxy-4-allylphenol
2-allylphenol
2,2-bis(4-allyloxyphenyl)propane
3-(3-methoxy-4-allyloxyphenyl)propene
3-(2-allyloxyphenyl)propene
triallyl cyanurate
triallyl isocyanurate
diallyl phthalate
allyl phenyl compounds *
allyl nadimides **
styrene
divinylbenzene
$\alpha$-methyl styrene
vinyl toluene
N-vinyl pyrrolidone
N-phenyl maleimide
(alk) acrylic acid esters of polyhydroxy compounds, eg trimethylol propane trimethacrylate, triethylene glycol dimethacrylate, bisphenol-A dimethacrylate and other (alk) acrylic acid esters of bisphenols
2,2-bis(4-phenylcyanato)propane
4,4′-diphenylsulphide dicyanate
1,3-benzene dicyanate
bis(3,5-methyl-4-phenylcyanate)methane.

Examples of epoxide-containing compounds include epoxy resin precursors which are typically the mono or poly-glycidyl derivative of one or more of:
aromatic diamines
aromatic monoprimary amines
aminophenols
polyhydric phenols
polyhydric alcohols

* Examples of these compounds are those available from Technochemie under codes TM120, TM121, TM122, TM122-1, TM123 and TM123-1, respectively.

** Examples of these compounds are those available from Ciba Geigy under codes RD 86-181, RD 86-182 and RD 86-183, respectively.

polycarboxylic acids.

Examples of such compounds, which are liquids at ambient temperature, are as follows:-
tetraglycidyl diamino diphenylmethane eg "MY 720" or "MY 721" sold by Ciba-Geigy, viscosity 10-20 Pa s at 50 °C; (MY 721 is a lower viscosity version of MY720 and is designed for higher use temperatures);
triglycidyl derivative of p-aminophenol (eg "MY 0510" sold by Ciba-Geigy), viscosity 0.55 - 0.85 Pa s at 25 °C;
diglycidyl ether of 2,2-bis(4,4′-dihydroxy phenyl) propane (eg "Epikote 828" sold by Shell), preferably of viscosity 8-20 25 Pa s at 25 °C;
epoxy Novolak (eg "DEN 431" sold by Dow), varieties in the low viscosity class of which are preferred in making compositions according to the invention;
bisphenol F, which is in the low viscosity class;

Other epoxy resin precursors include cycloaliphatics such as 3′,4′-epoxycyclohexyl-3-4-epoxycyclohexane carboxylate (eg CY 179 sold by Ciba-Geigy) and those in the "Bakelite" range of Union Carbide Corporation.

The weight proportion of reactive diluent is in the range 1% to 95%, preferably 5% to 60%, more especially 20% to 40%.

The inhibitor reagent prevents premature gellation of the BMI compound and can be selected from hydroquinone, benzoquinone, 2,6-ditertbutylphenol, methoxyhydroquinone and other phenols. However, the preferred inhibitor reagent is hydroquinone. The weight proportion of the inhibitor reagent is in the range 0.1% to 5%, preferably 0.5% to 3%.

The cross-linking reagent is suitably a catalyst of the radical initiator type, eg a peroxide such as tert-butyl perbenzoate and dicumyl peroxide, or of an ionic type, eg diazobicyclooctane. The amount of cross-linking reagent present is in the range 0.1% to 3% w/w of the stoichiometric requirement of the reactive species present.

The polymeric composition according to the invention can also comprise other thermoset components. For example, useful thermoset components are:-
addition-polymerisation resins such as acrylics, vinyls, and unsaturated polyesters;
formaldehyde condensate resins such as with urea, melamine or phenols;
cyanate resins;
isocyanate resins;
functionalised polyesters, polyamides or polyimides;
epoxy resins; and
mixtures of two or more of these.

The epoxy resin is suitably the product of at least partly curing a resin precursor using a curing agent and possibly also a catalyst. Typical resin precusors for this purpose have already been exemplified above in relation to the reactive diluent.

The curing agent is preferably an amino compound having a molecular weight up to 500 per amino group, for example an aromatic amine or a guanidine derivative. Particular examples are 3,3′- and 4,4′-diaminodiphenylsulphone, methylenedianiline and dicyandiamide. The total amine content of the curing agent is in the range 70-110% of the stoichiometric requirement of the epoxy resin precursor. Other standard epoxy curing agents such as aliphatic diamines, amides, carboxylic acid anhydrides, carboxylic acids and phenols can be used if desired.

If a catalyst is used, it is typically a Lewis acid, for example boron trifluoride, conveniently as a derivative with an amine such as piperidine or methyl ethylamine. Alternatively it can be basic, for example an imidazole or amine.

We find it advantageous to choose a low viscosity epoxy resin precursor (under 100, for example 0.3-50 Pa s at 25 °C) for at least part of the thermoset resin precursor. There may also be present a proportion of high viscosity (over 100 Pa s at 25 °C) epoxy resin precursor. By keeping the viscosity low or moderately low it becomes easier to ensure good flow behaviour when prepregging continuous fibre and to endow prepregs with tack and drape properties.

The polymer composition according to the invention can also comprise a thermoplast component. The thermoplast component can be selected from thermoplasts having non-reactive ends or having reactive ends or from mixtures thereof. Suitable thermoplasts for use in the composition are polyarylsulphones, polyimides, polybenzimidazoles, polyesters, polyarylketones preferably polyarylsulphones.

Preferred polyarylsulphone thermoplasts have polymer chains containing the repeating units $(PhSO_2Ph)_n$ connected through ether and/or thioether linkages, where Ph is phenylene, especially 1,4-phenylene, and n = 1 to 2 and can be fractional. It preferably contains also units $(Ph)_a$ so linked, where a is 1 to 3 and can be fractional, and such phenylenes are linked linearly through a single chemical bond or a

divalent group other than $SO_2$ or are fused together. By "fractional" reference is made to the average value for a given polymer chain containing units having various values of n or a.

A preferred polymer composition according to the invention comprises a thermoset component and a polyarylsulphone component, and in the polyarylsulphone component of which the relative proportions of said repeating units is such that on average at least two units $(PhSO_2Ph)_n$ are in immediate mutual succession in each polymer chain present and is preferably in the range 1:99 to 99:1, especially 10:90 to 90:10, respectively. Typically the ratio is in the range 25-50 $(Ph)_a$, balance $(Ph\ SO_2\ Ph)_n$. In preferred polyarylsulphones, the units are of formula III:-

X Ph $SO_2$ Ph X Ph $SO_2$ Ph ("PES") III

alone or together with units of formula IV:-

X $(Ph)_a$ X Ph $SO_2$ Ph ("PEES") IV

where X is -O- or -S- and may differ from unit to unit; and, when units of formula IV are present,the ratio of III to IV is preferably between 10:90 and 80:20 especially between 10:90 and 55:45.

The preferred relative proportions of the repeating units of the polyarylsulphone may be expressed in terms of the weight percent $SO_2$ content, defined as 100 times (weight of $SO_2$)/(weight of average repeat unit). The preferred $SO_2$ content is at least 22%, preferably 23% to 30%. When a = 1, this corresponds to PES/PEES ratios of at least 20:80, preferably in the range 35:65 to 65:35.

The above proportions refer only to the units mentioned. In addition to such units the polyarylsulphone may contain up to 50% especially up to 25% molar of other repeating units: the preferred $SO_2$ content ranges (if used) then apply to the whole polymer. Such units may be for example of the formula:-

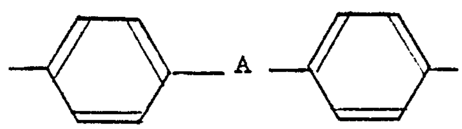

V

in which A is a direct link, -O-, -S-, -CO- or a divalent hydrocarbon radical. When the polyarylsulphone is the product of nucleophilic synthesis, its units may have been derived for example from one or more the following bisphenols and/or corresponding bisthiols or phenol-thiols:-

hydroquinone

4,4'-dihydroxybiphenyl

resorcinol

dihydroxynaphthalene (2,6 and other isomers)

4,4'-dihydroxydiphenyl ether or thioether

4,4'-dihydroxybenzophenone

2,2'-bis(4-hydroxyphenyl)propane or methane.

If a bisthiol is used, it may be formed in situ, that is a dihalide as described for example below may be reacted with an alkali sulphide or polysulphide or thiosulphate.

Other examples of such additional units are of the formula:-

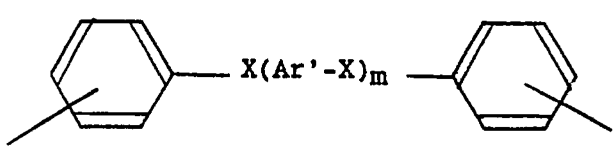

VI

in which X is independently -CO- or $-SO_2-$; Ar' is a divalent aromatic radical: and m is as hereinbefore defined provided that m is not zero where X is $-SO_2-$. Ar' is preferably at least one divalent aromatic radical selected from phenylene, biphenylene or terphenylene. Particular units have the formula:-

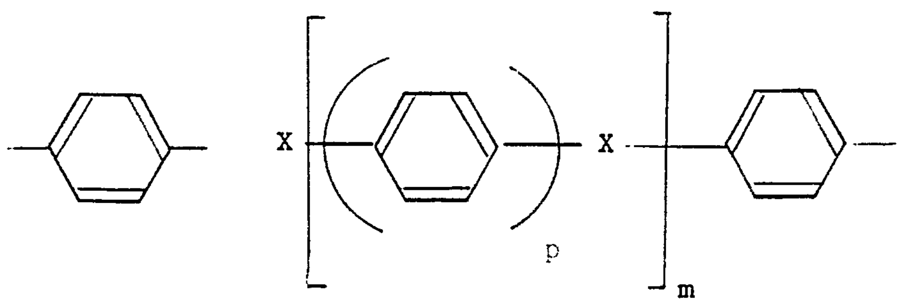

VII

where m>0. When the polymer is the product of nucleophilic synthesis, such units may have been derived from one or more dihalides, for example:-

4,4′-dihalobenzophenone
4,4′-bis(4-chlorophenylsulphonyl)biphenyl
1,4 bis(4-halobenzoyl)benzene
4,4′-bis(4-halobenzoyl)biphenyl

They may of course have been derived partly from the corresponding bisphenols.

The polyarylsulphone may be the product of nucleophilic synthesis from halophenols and/or halothiophenols. In any nucleophilic synthesis, the halogen, if chlorine or bromine, may be activated by the presence of a copper catalyst. Such activation is often unnecessary if the halogen is activated by an electron withdrawing group. In any event fluoride is usually more active than chloride. Any nucleophilic synthesis of the polyarylsulphone is carried out, preferably in presence of one or more alkali metal carbonates in up to 10% molar excess over the stoichiometric and of an aromatic sulphone solvent, at a temperature in the range 150-350 °C.

If desired, the polyarylsulphone may be the product of electrophilic synthesis.

The polyarylsulphone preferably contains end groups and/or pendant groups of formula $-R^6-Z$ where $R^6$ is a divalent hydrocarbon group, preferably aromatic, and Z is a group reactive with maleimide groups or with a curing agent or with like groups on other polymer molecules. Examples of Z are groups providing active hydrogen especially -OH, $-NH_2$, $-NHR^7$ or -SH, where $R^7$ is a hydrocarbon group containing up to 8 carbon atoms, or providing other cross-linking reactivity especially epoxy, cyanate, isocyanate, acetylene or ethylene, as in vinyl, allyl or maleimide.

The number average molecular weight of the polyarylsulphone is suitably in the range 2000 to 60000. Preferably it is over 9000 especially over 10000 for example 11000 to 25000 and structurally as well as by chemical interaction increases toughness by comparison with that of the thermoset resin alone by providing zones of the tough thermoplast between cross-linked thermoset zones. Another useful sub-range is 3000 -11000, especially 3000-9000 in which it acts more as a chain-extender for the thermoset resin, separating and diluting local cross-link zones and thus toughening the structure. Within the above definition of the polyarylsulphone those are preferably chosen which are miscible with the thermoset component precursors, have high modulus and Tg and are tough.

It is convenient to use reduced viscosity (RV), measured on a solution of 1g of polymer in 100 ml of solution in dimethyl formamide at 25 °C as an indication of molecular weight, the correlation being as follows:-

| | | | | |
|---|---|---|---|---|
| RV | 0.15 | 0.25 | 0.45 | 0.92 |
| MW (number average) | 5000 | 13000 | 20000 | 60000 |

(Such molecular weights were in fact measured by vapour phase osmometry and are of course subject to the usual error range of about 10 %).

The weight proportion of thermoplast component in the composition is typically in the range 2 to 95%, preferably 5% to 50%, more especially 10% to 35%. These percentages represent non-volatile constituents after curing the thermoset component(s) at up to 200 °C.

Preferred polymer compositions of the invention comprise a thermoset component and a thermoplast component which is characterised by each component being present at least partly as a phase elongated in

at least one direction as described and claimed in European Patent Application No. 88309231 (EP-A-311349). The preferred polyarylsulphones described above are preferably present in such compositions in amounts in the range 15% to 25%, preferably 17.5% to 22.5%, by weight.

The polymer compositions of the invention are particularly suitable for the fabrication of structures, including load-bearing or impact resisting structures. For this purpose it may contain a reinforcing agent such as fibres.

In composites according to the invention, the fibres can be added short or chopped typically of mean fibre length not more than 20 mm, for example about 6mm, typically at a concentration of 5% to 35%, preferably at least 20%, by weight. However, for structural applications, it is preferred to use continuous fibre for example glass or carbon, especially at 30% to 70%, more especially 50% to 70, % by volume.

The fibre can be organic, especially of stiff polymers such as poly paraphenylene terephthalamide, or inorganic. Among inorganic fibres glass fibres such as "E" or "S" can be used, or alumina, zirconia, silicon carbide, other compound ceramics or metals. A very suitable reinforcing fibre is carbon, especially as graphite. Organic or carbon fibre is preferably unsized or is sized with a material that is compatible with the composition according to the invention, in the sense of being soluble in the liquid precursor composition without adverse reaction or of bonding both to the fibre and to the thermoset/thermoplast composition according to the invention. In particular carbon or graphite fibres that are unsized or are sized with epoxy resin precursor or thermoplast such as polyarylsulphone are preferred. Inorganic fibre preferably is sized with a material that bonds both to the fibre and to the polymer composition; examples are the organo-silane coupling agents applied to glass fibre.

The composition may contain for example conventional toughening agents such as liquid rubbers having reactive groups, aggregates such as glass beads, rubber particles and rubber-coated glass beads, fillers such as polytetrafluoroethylene, graphite, boron nitride, mica, talc and vermiculite, pigments, nucleating agents, and stabilisers such as phosphates. The total of such materials and any fibrous reinforcing agent should be such that the composition contains at least 20% by volume of the polymer composition. The percentages of fibres and such other materials are calculated on the total composition after curing at up to 200°C.

The solvent and the proportion thereof are chosen so that the intermediate and the other ingredients form at least a stable emulsion, preferably a stable apparently single-phase solution. Mixtures of solvents can also be used, for example a mixture of ketones such as cyclopentanone and acetone, in a ratio suitably in the range 99:1 to 85:15. Conveniently, the solvents in such a mixture should boil at under 160°C at 1 atm pressure and should be mutually miscible in the proportions used.

The mixture is stirred until sufficiently homogeneous. Thereafter, the solvent is removed by evaporation. Evaporation is suitably at 50-200°C and, at least in its final stages, can be at subatmospheric pressure, for example in the range 0.1 to 10 mm Hg. The concentrated composition precursor preferably contains up to 5% w/w of volatile solvent, to assist flow when used in forming processes.

The concentrated composition precursor, possibly containing some volatile solvent already present or newly added, can be used for example as an adhesive or for coating surfaces or for making solid structures by casting, possibly in a foamed state. For composites according to the invention, short fibres may be added to the solution prior to evaporation of the solvent. However, preferred composites comprise continuous fibres, the composites being made by passing essentially continuous fibre into contact the solution of the intermediate and other ingredients. The resulting impregnated fibrous reinforcing agent may be used alone or together with other materials, for example a further quantity of the same or a different polymer or resin precursor or mixture, to form a shaped article.

A further procedure comprises forming incompletely cured composition into film by for example compression moulding, extrusion, melt-casting or belt-casting, laminating such films to fibrous reinforcing agent in the form of for example a non-woven mat of relatively short fibres, a woven cloth or essentially continuous fibre in conditions of temperature and pressure sufficient to cause the mixture to flow and impregnate the fibres and curing the resulting laminate.

Composites according to the invention can be comprised by plies of impregnated fibrous reinforcing agent laminated together by heat and pressure, for example by compression moulding or by heated rollers, at a temperature above the curing temperature of the thermoset component or, if cure has already taken place, above the glass transition temperature of the mixture, conveniently at least 150°C and typically about 190°C, and at a pressure in particular at least 0.1 $MN/m^2$, preferably at least 5 $MN/m^2$, followed by a free-standing post cure period, typically at about 240°C.

The resulting multi-ply laminate may be anisotropic in which the fibres are oriented essentially parallel to one another or quasi-isotropic in each ply of which the fibres are oriented at an angle, conveniently 45° as in most quasi-isotropic laminates but possibly for example 30° or 60° or 90° or intermediately, to those

in the plies above and below. Orientations intermediate between anisotropic and quasi-isotropic, and combination laminates, may be used. Suitable laminates contain at least four, preferably at least eight, plies. The number of plies is dependent on the application for the laminate, for example the strength required, and laminates containing thirty-two or even more, for example several hundred, plies may be desirable. There may be aggregates, as mentioned above in interlaminar regions.

In the following Examples, the quantities are quoted as parts by weight (pbw).

Example 1

3,3′-bismaleimidodiphenylsulphone (48pbw), 2,2′-bis(3-allyl-2-hydroxyphenyl)propane (32pbw) and hydroquinone (2pbw) were weighed into a stainless steel flask and heated to 180° C for 1 hour with stirring. The mixture gradually changed from an opaque mixture to a transparent, amber coloured fluid. The fluid was allowed to cool to room temperature and solidify before grinding the solid to a free-flowing powder. A powdered thermoplast component (a 50:50 mole% copolymer prepared from 4,4′-dihydroxydiphenylsulphone and 4,4′-bis(4-chlorophenylsulphonyl)biphenyl in accordance with the method described in Example 1 of the aforementioned EPA 88309231 (EP-A-311349) and amine end capped with 3-aminophenol and having a Tg of about 250° C and an RV of 0.16 (20pbw) was added to the powdered intermediate and the resultant powder mixture was dissolved in a 60:40 by volume mixture of cyclopentanone and acetone in an amount sufficient to yield a 50%w/w solution.

It should be noted the powdered intermediate/thermoplast mixture is readily soluble in other "easily-removed" solvents such as methylene chloride/methanol (90:10%v/v), cyclopentanone and cyclohexanone to form at least a 50%w/w solution whereas a mixture of the unreacted BMI and the thermoplast is only sparingly soluble in such solvents.

Example 2

A carbon-fibre tow (available from Hercules under the code name IM6) was prepregged using the solution prepared in Example 1 above. The tow was passed through the solution and onto a large drum winder. The continuous unidirectional prepreg was dried on the drum by heating the drum to 50° C for 3 hours and then under vacuum at 50° C overnight.

The dried prepreg was cut from the drum and plies approximately 150mm x 150mm were cut therefrom. 24 of the plies were laid up to form laminates for double cantilever beam (DCB) testing. The laid-up prepregs were cured by heating to 190° C under slight pressure in a press for 4 hours (heating and cooling rates were at 2° C/min). Post lamination curing was carried out at 240° C for 6 hours in an air-circulating oven (heating and cooling rates were at 2° C/min).

The quality of the cured laminates was assessed by C-scan and they were found to be substantially void free. The laminates had a $G_{Ic}$ value of $0.22kJm^{-2}$.

## Claims

1. A polymer composition comprising a thermoset component which is the reaction product of a cross-linking reaction involving an intermediate, and optionally a cross-linking reagent, said intermediate being a reaction product of a bismaleimide compound and a reactive diluent reacted in the presence of an inhibitor reagent capable of inhibiting cross-linking reactions between maleimide groups, said diluent being selected from compounds having an unsaturated bond and/or a reactive oxygen-carbon bond capable of reacting with said bismaleimide compound and said inhibitor reagent being present in a quantity sufficient to inhibit said cross-linking reactions during the formation of said intermediate but not in a quantity sufficient to inhibit said cross-linking reactions during the formation of said thermoset component.

2. A polymer composition according to claim 1, in which said bismaleimide compound is selected from compounds of formula I:-

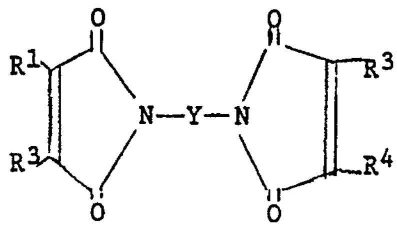

I

wherein
$R^1$,$R^2$,$R^3$ and $R^4$ are independently -H, $-CH_3$ or halogen, preferably Cl; and
Y is $R^5$ or Ar;
wherein
$R^5$ is $C_1$ to $C_{12}$ alkylene, straight or branched chain, eg $-CH_2C(CH_3)_2CH_2CH(CH_3)CH_2CH_2-$; and
Ar is alkyl-substituted,eg methyl, 1,3- or 1,4-phenylene or $Ph(X-Ph)_m$;
wherein
Ph is phenylene;
m is an integer from 0 to 3; and
X is independently -O-, -S-, -CO-, $-SO_2-$, $-CH_2-$, $-C(CH_3)_2-$or $-C(CF_3)_2-$; or may be an oligomeric or polymeric reaction product of a Michael addition reaction between a BMI compound of formula I and a diamine of formula II or an amino acid hydrazide:-
$H_2N-Ph(X-Ph)_mNH_2$ II.
wherein
m and X are as hereinbefore defined.

3. A polymer composition according to claim 1 or claim 2, in which said reactive diluents are selected from compounds containing allyl, isopropenyl, vinyl, acrylic, cyanate and/or epoxide radicals.

4. A polymer composition according to any one of the preceding claims, in which said inhibitor reagent is selected from quinones and phenols, particularly hydroquinone.

5. A polymer composition according to any one of the preceding claims, in which, when used, said cross-linking agent is a catalyst of the radical initiator type.

6. A polymer composition according to any one of the preceding claims, in which the weight proportion of bismaleimide compound used is in the range 5% to 95%, preferably 30% to 70%, and more especially 40% to 60%; and in which the weight proportion of reactive diluent used is in the range 1% to 95%, preferably 5% to 60%, and more especially 20% to 40%; and in which the weight proportion of inhibitor reagent used is in the range 0.1% to 5%, preferably 0.5% to 3%; and in which the amount of cross-linking reagent present when used is in the range 0.1% to 3% w/w of the stoichiometric requirement of the reactive species present.

7. A polymer composition according to any one of the preceding claims, in which the composition further comprises at least one other thermoset component.

8. A polymer composition according to any one of the preceding claims, in which the composition further comprises at least one thermoplast component particularly when selected from polyarylsulphones, polyimides, polybenzimidazoles, polyesters and polyarylketones, and more especially from polyarylsulphones.

9. A polymer composition according to claim 8, in which the weight proportion of said thermoplast component is in the range 2% to 95%, preferably 5% to 50%, and more especially 10% to 35%.

10. A polymer composition according to claim 8 or claim 9, in which, when said thermoplast component is a polyarylsulphone, the composition is characterised by each component being present at least partly as a phase elongated in at least one direction.

11. A process for the preparation of said intermediate specified in any one of the preceding claims, comprising reacting said bismaleimide compound with said diluent in the presence of said inhibitor reagent.

12. A composite comprising a polymeric matrix and a reinforcing agent, particularly when said reinforcing agent comprises fibres, said matrix comprising a polymer composition according to any one of the preceding claims.

13. A process for the preparation of the composite according to claim 12 in which the reinforcing agent comprises fibres, comprising impregnating fibres with a solution comprising said intermediate, and optionally said cross-linking reagent, and removing the solvent therefrom.

14. A process according to claim 13, further comprising treating the impregnated fibres to cause said

intermediate, and optionally said cross-linking reagent, to react to produce the thermoset component.

15. An intermediate as defined in any one of claims 1 to 10 which is prepared by reacting said bismaleimide compound with said diluent in the presence of said inhibitor reagent, said intermediate being soluble in easily-removed solvents or solvent mixtures.

16. A solution of said intermediate according to claim 15 in an easily-removed solvent or solvent mixture.

17. A solution according to claim 16, in which the solvent or solvent mixture boils at a temperature under 160 °C at 1 atmosphere pressure.

18. A prepreg comprising fibres, particularly continuous collimated fibres, impregnated with an intermediate as defined in claim 15.